**Europäisches Patentamt**

**European Patent Office**

**Office européen des brevets**

(11) Publication number: **0 010 943**
**B1**

(12) **EUROPEAN PATENT SPECIFICATION**

(45) Date of publication of patent specification: **05.09.84**

(21) Application number: **79302364.9**

(22) Date of filing: **29.10.79**

(51) Int. Cl.³: **F 16 J 3/02, F 04 B 43/00**

(54) Fluid pressure-driven diaphragm pump.

(30) Priority: **30.10.78 US 956189**

(43) Date of publication of application:
**14.05.80 Bulletin 80/10**

(45) Publication of the grant of the patent:
**05.09.84 Bulletin 84/36**

(84) Designated Contracting States:
**DE FR GB IT NL SE**

(56) References cited:
**DE-A-1 675 349**
**DE-A-2 361 261**
**US-A-3 841 772**
**US-A-3 911 796**

**Lewa Information No. D10-017d, Lewa Herbert
OTT KG, D-725 Leonberg
Technische Mitteilungen Vulkan-Verlag D.W.
Classer Essen Haus der Technik Heft 5, 61.
Jahrgang, Mai 1968**

(73) Proprietor: **Tuck, Jr., Alan Dean**
**2370 North Euclid Avenue**
**Upland, California (US)**

(72) Inventor: **Tuck, Jr., Alan Dean**
**2370 North Euclid Avenue**
**Upland, California (US)**

(74) Representative: **Coulson, Antony John et al**
**ABEL & IMRAY, Northumberland House 303-306**
**High Holborn**
**London, WC1V 7LH (GB)**

Courier Press, Leamington Spa, England.

## Description

### Technical Field

The present invention relates to fluid pressure-driven diaphragm pumps.

### Background of the Invention

Air-driven diaphragm pumps have found great utility in the pumping of materials and powders which have any one of the properties of being very non-homogenous, very viscous, very active chemically and very dirty. In view of the wide range of applications of such heavy-duty pumps, it is necessary to provide a wide range of construction materials which are not chemically sensitive, not easily abraded or not easily cut by the substances and mixtures passing through the pump. One group of diaphragm materials which has been found to exhibit multiple advantages in this regard are synthetic resin polymers, some of which are offered for sale under the trademark TEFLON. However, such materials also are relatively rigid and have a tendency to fail along defined distress lines under repeated flexure. Consequently, such materials have been generally felt to be economically unsuitable for use in such situations, and TEFLON diaphragms have hitherto been contemplated only for very low throughput (metering) purposes — see for instance LEWA-Information No. D 01-017d (1975).

In the Applicant's own experience, diaphragms having a basic configuration like that of the present invention have hitherto tended to fail due to cracking along radial lines of the diaphragm after unacceptably low numbers of cycles of the diaphragm in a pump. Thus, for example, TEFLON diaphragms have been found to be very expensive because of both the initial cost and the short life.

Accordingly, it is an object of the present invention to provide a diaphragm pump having an improved diaphragm and, in particular, to provide a pump diaphragm less subject to radial cracking.

The present invention provides a fluid pressure-driven diaphragm pump having a diaphragm which includes an inner attachment portion, an outer attachment portion and a sheet-like annular flexure portion which is bounded by said inner and outer attachment portions, has a concaved fluid pressure-receiving side and is formed of a polytetrafluoroethylene or of another inflexible synthetic resin polymer likewise susceptible, in operation of the pump, to radial cracking resulting from radial stretching under the working load, characterised in that there is a plurality of concentric continuous ribs spaced substantially uniformly across the width of the fluid pressure-receiving side of the flexure portion in order to avoid radial cracking caused by radial stretching of the diaphragm in operation, the ribs being formed of the same or a different synthetic resin polymer.

Preferably, the configuration of the ribs is such that the surface of said fluid pressure-receiving side is substantially sinusoidal in a radial direction.

Advantageously, the ribs are formed integrally with the flexure portion, that is to say, in one piece with that portion.

The annular flexure portion advantageously has a convex, rib-less working side.

Further, the diaphragm which can be used with relatively inflexible materials may be TEFLON. The present invention can substantially increase the life of such diaphragms which heretofore have experienced early failure due to radial cracking.

To increase the life of such diaphragms, it has been found that the concentric ribs of the present invention provide sufficient stiffness in the circular direction while allowing relatively free radial extension of the diaphragm.

Instead of a polytetrafluoroethylene resin polymer such as that sold under the trade name TEFLON, the flexure portion (and/or the ribs of the invention) may comprise another synthetic plastics material.

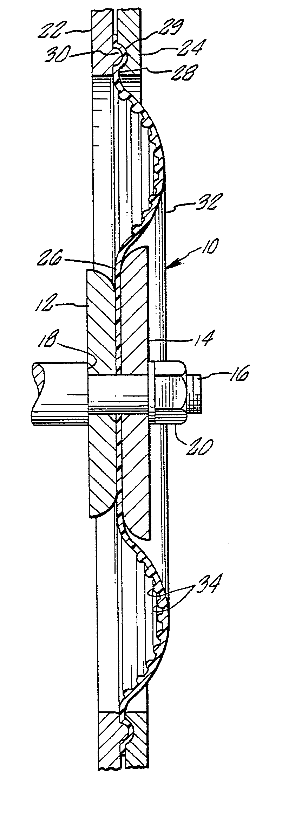

One form of diaphragm according to the invention will now be described, by way of example, with reference to the accompanying drawing, which is a cross-sectional side view of the diaphragm shown with the immediately adjacent parts of an air-driven diaphragm pump.

Looking to the drawing, a diaphragm designated generally by the reference numeral 10 is illustrated in association with an inner piston 12 and an outer piston 14. The pistons are held in place by a piston rod 16 having a shoulder 18 and a threaded portion for receiving a nut 20. Portions of the inner housing 22 and outer housing 24 are also illustrated in association with the diaphragm 10.

The diaphragm 10 includes an inner attachment portion 26 which is intended to extend between the inner and outer pistons 12 and 14. A central aperture is provided in the inner attachment portion 26 for receipt of the piston rod 16; and the inner attachment portion 26 is generally circular in plan.

Associated with the housing members 22 and 24 is an outer attachment portion 28. The outer attachment portion includes a semi-circular channel 29 which acts in interlocking engagement with a head fixed on the pump housing. In the present embodiment, a bead 30 is shown integral with the housing 22. The bead may instead be an independent piece locked in a channel within that housing. The semi-circular channel extends about the circumference of the diaphragm 10 and also helps to form a seal for the pumping chamber.

Located between the inner attachment portion 26 and the outer attachment portion 28 of the diaphragm is a flexure portion 32. The flexure portion 32 is annular in configuration and is concave on the air pressure side. The flexure portion is generally sheet-like and the concavity allows for movement of the piston rod 16 without great resistance from the diaphragm itself.

Located on the pressure-receiving side of the diaphragm are a number of concentrically arranged ribs 34. These ribs 34 are spaced substantially uniformly across the flexure portion 32 as can be seen in the drawing. A smooth transition between each rib and the main pressure side surface of the diaphragm 10 is used to prevent high stress points which could detract from the life of the diaphragm. The configuration of the ribs 34 is such as to form an approximately sinusoidal surface on the diaphragm 10 wherein the valleys between the ribs provide a diaphragm thickness equal to the thickness of the unribbed portions of the diaphragm. The diaphragm thickness including a rib is almost twice the minimum thickness in the valleys between ribs.

The introduction of ribs on the diaphragm increases the moment of inertia resisting flexure along a line perpendicular to the longitudinal direction of the rib. Thus, the diaphragm of the present invention resists radial flexure more than conventional diaphragms. It has been found that this reduction in flexure adds to the life of TEFLON diaphragms. The addition of the ribs 34 also reduces the flexibility of the diaphragm to concentric flexure. Thus, the operative flexibility of the diaphragm in the direction in which it must flex to work is reduced. By increasing the thickness of the diaphragm at the ribs 34, greater strain is experienced by the areas of the diaphragm between ribs. However, it has been found that a net positive effect is gained by the use of the ribs 34.

As an example of one embodiment of the present invention, a diaphragm has been constructed having an overall diameter of 29.62 cm (11-21/32"). The diaphragm thickness at the inner attachment portion 26, the outer attachment portion 28 and the valleys between the ribs 34 is 0.198 cm (.078"). The thickness of the diaphragm including the ribs 34 is 0.356 cm (.140"). The peaks of the ribs 34 are spaced 0.635 cm (.25") apart. There are ten such ribs in the flexure portion 32. The flexure portion has a width between the inner attachment portion 26 and the outer attachment portion 28 of 8.02 cm (3.16").

The Applicant has become aware of DE—A—1 675 349 (Langen) which discloses, in a hydro-accumulator, a diaphragm configuration which is superficially similar to that of the present invention. Langen, however, is concerned with a quite different problem, namely the avoidance of folding of a flexible diaphragm, and is nowhere concerned with radial cracking caused by stretching of a relatively stiff material.

## Claims

1. A fluid pressure-driven diaphragm pump having a diaphragm which includes an inner attachment portion (26), an outer attachment portion (28) and a sheet-like annular flexure portion (32) which is bounded by said inner and outer attachment portions, has a concaved fluid pressure-receiving side and is formed of a polytetrafluoroethylene or of another inflexible synthetic resin polymer likewise susceptible, in operation of the pump, to radial cracking resulting from radial stretching under the working load, characterised in that there is a plurality of concentric continuous ribs (34) spaced substantially uniformly across the width of the fluid pressure-receiving side of the flexure portion in order to avoid radial cracking caused by radial stretching of the diaphragm in operation, the ribs being formed of the same or a different synthetic resin polymer.

2. A pump as claimed in claim 1, characterised in that the ribs (34) form a substantially sinusoidal surface in the radial direction on said fluid pressure-receiving side across the width of said pressure-receiving side.

3. A pump as claimed in claim 1 or claim 2, characterised in that said annular flexure portion (32) has a convex, rib-less working side.

4. A pump as claimed in any one of claims 1 to 3, characterised in that the synthetic resin polymer forming the annular flexure portion (32) comprises a polytetrafluoroethylene.

5. A pump as claimed in any one of claims 1 to 4, characterised in that the ribs (34) are formed of a polytetrafluoroethylene.

6. A pump as claimed in any one of claims 1 to 5, characterised in that the said ribs (34) are formed in one piece with the flexure portion (32).

## Revendications

1. Pompe à membrane entraînée par la pression d'un fluide présentant une membrane qui comporte une zone de fixation intérieure (26), une zone de fixation extérieure (28) et une zone de flexion annulaire en forme de feuille (32) qui est limitée par lesdites zones de fixation intérieure et extérieure, présente une face concave recevant la pression du fluide et est constituée par un polytétrafluoroéthylène ou par un autre polymère de résine synthétique inflexible susceptible de se fendre radialement lorsque la pompe est en action, sous l'effet de l'allongement radial résultant de la charge de travail, caractérisée en ce que ladite zone de flexion comporte une pluralité de nervures continues concentriques (34) espacées essentiellement uniformément en travers de la largeur de la face recevant la pression du fluide, de façon à éviter le fendillement radial dû à l'allongement radial de la membrane en fonctionnement, les nervures étant constituées par le même polymère de résine synthétique ou par un polymère différent.

2. Pompe selon la revendication 1, caractérisée en ce que les nervures (34) forment une surface sensiblement sinusoïdale dans la direction radiale de ladite face recevant la pression du fluide, et en travers de la largeur de cette face.

3. Pompe selon la revendication 1 ou la revendication 2, caractérisée en ce que ladite zone de flexion annulaire (32) présente une face travaillante convexe et dépourvue de nervures.

4. Pompe selon l'une quelconque des revendications 1 à 3, caractérisée en ce que le polymère de résine synthétique constituant la zone de flexion annulaire (32) comporte un polytétrafluoroéthylène.

5. Pompe selon l'une quelconque des revendications 1 à 4, caractérisée en ce que les nervures (34) sont constituées par un polytétrafluoroéthylène.

6. Pompe selon l'une quelconque des revendications 1 à 5, caractérisée en ce que lesdites nervures (34) sont d'une seule pièce avec la zone de flexion (32).

**Patentansprüche**

1. Eine Druckfluidangetriebene Membranpumpe mit einer Membran, die einen inneren Befestigungsabschnitt (26), einen äußeren Befestigungsabschnitt (28) und einen blattartigen ringförmigen Deformationsabschnitt (32) aufweist, der von den genannten inneren und äußeren Befestigungsabschnitten begrenzt ist, eine konkav ausgebildete fluiddruckbeaufschlagte Seite besitzt und aus einem Polytetrafluoräthylen oder einem anderen nicht flexiblen synthetischen Harzpolymer besteht, das in gleicher Weise während des Pumpenbetriebes empfindlich ist gegenüber Radialrissen aufgrund radialer Zugbelastung unter der Arbeitsbelastung, dadurch gekennzeichnet, daß eine Mehrzahl konzentrischer kontinuierlicher Rippen (34), die im wesentlichen in gleichenförmigen Abstand über die Breite der fluiddruckbeaufschlagten Seite des Deformationsabschnittes angeordnet sind, um Radialrisse zu vermeiden, die durch radiale Zugbelastung der Membran im Betrieb bewirkt werden, wobei die Rippen aus demselben oder einem abweichenden synthetischen Harzpolymer bestehen.

2. Eine Pumpe nach Anspruch 1, dadurch gekennzeichnet, daß die Rippen (34) eine im wesentlichen sinusförmige Oberfläche in Radialrichtung auf der besagten fluiddruckbelasteten Seite über die Breite der druckbelasteten Seite bilden.

3. Eine Pumpe nach Anspruch 1 oder 2, dadurch gekennzeichnet, daß der ringförmige Deformationsabschnitt (32) eine konvexe rippenlose Arbeitsseite aufweist.

4. Eine Pumpe nach einem der Ansprüche 1 bis 3, dadurch gekennzeichnet, daß das synthetische Harzpolymer, das den ringförmigen Deformationsabschnitt (32) bildet, einen Polytetrafluoräthylen umfaßt.

5. Eine Pumpe nach einem der Ansprüche 1 bis 4, dadurch gekennzeichnet, daß die Rippen (34) aus einem Polytetrafluoräthylen gebildet sind.

6. Eine Pumpe nach einem der Ansprüche 1 bis 5, dadurch gekennzeichnet, daß die Rippen (34) einstückig mit dem Deformationsabschnitt (32) gebildet sind.